(19) **Europäisches Patentamt**

**European Patent Office**

**Office européen des brevets**

(11) **EP 1 624 393 A1**

(12) **EUROPEAN PATENT APPLICATION**

(43) Date of publication:
**08.02.2006 Bulletin 2006/06**

(51) Int Cl.:
**G06F 17/50** (2006.01)

(21) Application number: **04447184.5**

(22) Date of filing: **06.08.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(71) Applicant: **VRIJE UNIVERSITEIT BRUSSEL**
**1050 Brussel (BE)**

(72) Inventors:
• **Naudet Joris**
  **2970 Schilde (BE)**
• **Lefeber Dirk**
  **2870 Liezele (BE)**

(74) Representative: **Bird, Ariane et al**
  **Bird Goën & Co**
  **Klein Dalenstraat 42A**
  **3020 Winksele (BE)**

(54) **System and method for simulating motion of a multibody system**

(57) The present invention relates to a method and system for describing the motion of a closed-loop multibody mechanism. In this case, equations of motion need to be obtained for constrained multibody systems. The invention is based on a forward dynamics formulation resulting in a recursive Hamiltonian formulation for closed-loop systems using generalised co-ordinates and conjugated canonical momenta. The method allows to limit the number of arithmetical operations necessary to obtain the equations of motion with a good evolution of the constraints violation errors. Calculations can be performed based on constrained articulated momentum vectors.

Fig. 1

EP 1 624 393 A1

## Description

## Technical field of the invention

The present invention relates to systems and methods for visualising, simulating or predicting motion of mechanical systems comprising multiple bodies. More specifically, the present invention relates to systems and methods for determining a set of equations of motion describing the motion of a constrained mechanical system comprising multiple bodies and systems and methods for studying, visualising, simulating or predicting the forward dynamics of a constrained mechanical system comprising multiple bodies. The methods may be used for design purposes or for verifying design performance. Further the present invention relates to controllers for control of multibody systems that use methods for simulating or predicting motion, e.g. a controller for controlling the movement of a robot or a flight or transport vehicle simulator. The control may be made at a distance, e.g. for the control of robotic vehicles for planetary exploration controlled from earth, i.e. with an unacceptable transmission delay. It also relates to software implementing methods for simulating or predicting such motion. It also relates to games which require simulation or prediction of multibody movements for realistic display purposes.

## Background of the invention

During the last decades, significant effort has been put in the improvement of simulation methods for mechanical systems comprising multiple bodies, also called multibody systems. These efforts have been required by the ever increasing complexity of investigated structures and the need for faster simulations to reduce time-to-market or enable real-time computations. Simulation of the motion of mechanical multibody systems has a wide variety of applications such as virtual prototyping, virtual reality and computer animation. In virtual prototyping, computer models and simulations are used to check and study the behaviour of mechanical systems such as e.g. cars or a landing gear of a spacecraft without the need to build prototypes. The latter allows a significant reduction both in temporal and financial costs. For virtual reality, the simulations of the motion of mechanical multibody systems need to be very efficient as they need to be in real-time. Mechanical animations are used in a wide variety of applications, e.g. in animation movies and computer games. In all these applications a computational high efficiency is indispensable.

The usability of algorithms typically is determined by two important factors: a first factor is the ease of establishment of the equations of motion, a second factor is the ease of numerical integration of these equations. From the numerous ways to treat the equations of motion, the recursive formulations have proven to be very efficient for large numbers of bodies, as shown in e.g. Robot Dynamics Algorithms by Featherstone (Kluwer Academic Publishers 1987). Most of the well-known methods and systems for describing motion of a mechanical system comprising multiple bodies are based on Newton-Euler equations, the Lagrangian equations or the principle of virtual work or virtual power, i.e. expressing that reaction forces do not deliver any power under a virtual motion. In all these cases, second order differential equations are obtained and the algorithms come down to calculating and integrating accelerations.

The set of co-ordinates used to describe the system also strongly influences the usability of the algorithms, as the type and number of co-ordinates has strong repercussions on the numerical integration of the equations of motion. Expressing the equations of motion in a minimal set of co-ordinates results in less differential equations, which are however more coupled and usually exhibit stronger non-linearities, compared to non-minimal formulations. The advantage of using a minimal set of co-ordinates is that no constraint equations are required and that only a set of ordinary differential equations (ODE's) must be solved. Non-minimal formulations on the other hand, result in a differential algebraic equation system (DAE), but are in general much easier to establish.

Besides manipulating the number of co-ordinates, also the type of co-ordinates used to describe the system can be chosen specifically. Acceleration based formulations require starting values for the generalised co-ordinates and the velocities. In that sense, one can also think of these equations as first order differential equations in the generalised co-ordinates and the velocities. An alternative formulation is obtained if Hamilton's equations are used, which are expressed in terms of the generalised co-ordinates and their conjugated canonical momenta. The latter equations, also referred to as Hamiltonian equations, behave better during numerical integration, resulting in more accuracy and stability. Nevertheless, the Hamiltonian formulation is not often used in the description of multibody dynamics. The reason probably is that the construction of Hamilton's equations is computationally intensive and cannot compete with the recursive acceleration based algorithms, even with the advantageous behaviour during the numerical integration. Nevertheless, the use of Hamiltonian equations in multibody systems dynamics has led to very positive results, as for example described by Lankarani et al. in Advances in Design Automation **1**, (1988) 417-423 and by Bayo et al. in Nonlinear Dynamics **5**, (1994) 209-231. An additional step to promote the use of conjugated canonical momenta was taken by introducing a new recursive method to establish Hamilton's equations for open-loop rigid multibody systems, as described by Naudet et al. in Multibody Dynamics 2003 IDMEC/IST Lisbon, July 1-4 2003. The latter method describes an Hamiltonian O(n) equivalent for the acceleration based methods which exceeds the acceleration based algorithms in performance at the level of number of required arithmetical operations.

The problem of describing the dynamics of a constraint multibody system, as is e.g. the case with closed-loop systems, is even more labour-intensive and tedious. If e.g. the calculations are based on the use of the Jacobian of the constraint equations, which is a legal way of tackling the problem, huge obstacles are introduced when a recursive algorithm is desired, as a strong interconnection between the co-ordinates is created. This is illustrated in the following. For a closed loop multibody system or a constrained multibody system, a relationship is created between the joint co-ordinates. These constraints can be expressed as a set of algebraic equations:

$$\mathbf{\Phi(q,t)=0} \qquad\qquad [1]$$

Instead of dealing with these generally non-linear equations, a time derivative can be taken to obtain a set of linear equations in the joint velocities.

$$\mathbf{\Phi_q\dot{q}}=-\frac{\partial\mathbf{\Phi}}{\partial\mathbf{t}} \qquad\qquad [2]$$

whereby $\mathbf{\Phi_q}=\dfrac{\partial\mathbf{\Phi}}{\partial\mathbf{q}}$ is the Jacobian matrix of the constraint equations and $\dfrac{\partial\mathbf{\Phi}}{\partial\mathbf{t}}$ is the partial derivative of the constraint equations with respect to time. As the co-ordinates are related to each other by means of the algebraic equations, it is possible to make a partition in dependent $\mathbf{q}_d$ and independent $\mathbf{q}_i$ co-ordinates. The choice is not always arbitrary, it mainly depends on numerical issues.

$$\mathbf{\Phi_{q_d}\dot{q}_d+\Phi_{q_i}\dot{q}_i}=-\frac{\partial\mathbf{\Phi}}{\partial\mathbf{t}} \qquad\qquad [3]$$

The dependent joint velocities are then equal to:

$$\mathbf{\dot{q}_d}=-\mathbf{\Phi_{q_d}^{-1}}\left(\mathbf{\Phi_{q_i}\dot{q}_i}+\frac{\partial\mathbf{\Phi}}{\partial\mathbf{t}}\right) \qquad\qquad [4]$$

An incorrect partitioning will lead to singularity or at least bad conditioning of $\Phi_{qd}$. In general, the dependent velocities will be functions of all independent velocities. The latter inhibits the possibility to obtain recursively formulated equations of motion. The latter solution therefore does not allow to efficiently determine the motion of a constrained mechanical system comprising multiple bodies.

In other words, the standard techniques can be used for simulating the motion of these constrained multibody systems, butthe strong interdependency of the co-ordinates and their velocities makes it difficult to tailor a O(n) recursive algorithm.

**Summary of the invention**

It is an object of the present invention to provide a method and system for efficiently simulating the motion of a constrained mechanical system comprising multiple bodies. The above objective is accomplished by a method and device according to the present invention.

The invention relates to a method and apparatus for determining equations of motion of a constrained mechanical system comprising multiple bodies, wherein the equations of motion are intended to be used for calculating at least position related information of the constrained mechanical system, and wherein said equations of motion are recursively formulated Hamiltonian equations of motion.

The constrained mechanical system may be constrained by a set of constraints defining a constraint subspace. The constrained mechanical system furthermore may comprise at least one fixed joint and at least one further joint constrained by at least one constraint of the set of constraints. The method may comprise, for each Kth body of the constrained mechanical system, determining a quantity related to a constrained articulated momentum vector of said $K^{th}$ body, said constrained articulated momentum vector of said $K^{th}$ body being the sum of a momentum vector of the $K^{th}$ body of the system and the projected constrained articulated momentum vectors of adjacent bodies that are located closer to said at least one further joint, said projected constrained articulated momentum vectors being projected on said constraint subspace and referring to a local reference frame of the $K^{th}$ body, and thereafter using said quantities related to said constrained articulated momentum vectors for obtaining a set of Hamiltonian equations of motion for said constrained mechanical system. Obtaining a set of Hamiltonian equations of motion may comprise, for generalized co-ordinates **q**, conjugated canonical momenta **p**, and time t, obtaining expressions for the time derivatives of the qeneralized co-ordinates **q** and the time derivatives of the conjugated canonical momenta **p**

$$\dot{\mathbf{q}} = F(\mathbf{q}, \mathbf{p}, t)$$

$$\dot{\mathbf{p}} = G(\mathbf{q}, \mathbf{p}, t)$$

These expressions for the time derivatives may determine the motion of each of said multiple bodies.

Determining a quantity related to a constrained articulated momentum vector of said $K^{th}$ body may comprise determining a constrained articulated momentum vector $\mathbf{P}_{\mathbf{K}}^{\mathbf{c}}$ given by

$$\mathbf{P}_{\mathbf{K}}^{\mathbf{c}} = \mathbf{P}_{\mathbf{K}} + \sum_{\mathbf{j} \in \mathbf{AOB}} {}^{\mathbf{K}}\mathcal{T}_{\mathbf{j}}^{\mathbf{F}} \mathbf{C}_{\mathbf{j}}^{\mathbf{T}} \mathbf{P}_{\mathbf{j}}^{\mathbf{c}}$$

wherein $\mathbf{P}_k$ is said momentum vector of the $K^{th}$ body, $\mathbf{C}_{\mathbf{j}}^{\mathbf{T}} \mathbf{P}_{\mathbf{j}}^{\mathbf{c}}$ is said projection of the constrained momentum vector of an adjacent body closer to the at least one further joint and ${}^{\mathbf{K}}\mathcal{T}_{\mathbf{j}}^{\mathbf{F}}$ is a transformation matrix transforming the projection of the constrained momentum vector $\mathbf{C}_{\mathbf{j}}^{\mathbf{T}} \mathbf{P}_{\mathbf{j}}^{\mathbf{c}}$ referred to a local reference frame of a $j^{th}$ body to the projection of the constrained momentum vector $\mathbf{C}_{\mathbf{j}}^{\mathbf{T}} \mathbf{P}_{\mathbf{j}}^{\mathbf{c}}$ referred to said local reference frame of said $K^{th}$ body. Said method furthermore may comprise using a principle of virtual power.

The method furthermore relates to a method for visualising, simulating or predicting, over a number of time steps $\delta t$ , motion of a constrained mechanical system comprising multiple bodies, the method comprising obtaining a set of Hamiltonian equations of motion for said constrained mechanical system, and, for each of said number of time steps $\delta t$ , recursively calculating at least position related information of said multiple bodies of said constrained mechanical system based on said set of Hamiltonian equations of motion. The set of Hamiltonian equations of motion may comprise, for generalized co-ordinates **q**, conjugated canonical momenta **p**, and time t, expressions for the time derivatives of the qeneralized co-ordinates **q** and of the conjugated canonical momenta **p**

$$\dot{\mathbf{q}} = F(\mathbf{q}, \mathbf{p}, t)$$

$$\dot{\mathbf{p}} = G(\mathbf{q}, \mathbf{p}, t)$$

Recursively calculating may comprise:

- backward recursively calculating a constrained articulated mass matrix for the constrained mechanical system,
- forward recursively calculating the time derivatives of the generalised coordinates **q** ,
- backward recursively calculating constrained accumulated force vectors, each constrained accumulated force vector expressing the accumulated force on the body under study, and determining the time derivatives of the conjugated canonical momenta **p**.

Obtaining a set of Hamiltonian equations of motion for said constrained mechanical system may comprise determining a set of equations of motion according to any of the methods according to the present invention for determining equations of motion of a constrained mechanical system.

Obtaining a set of Hamiltonian equations of motion for said constrained mechanical system may comprise inputting a set of Hamiltonian equations of motion from a data source.

The motion may comprise the forward dynamics of said constrained mechanical system. The method may comprise studying an impact on said constrained mechanical system based on a sudden change in said qeneralized co-ordinates **q** or said conjugated canonical momenta **p**. The method may comprise studying multiple bodies in contact with each other. The multiple bodies may be rigid bodies, each body connected to at least another body of said multiple bodies with a joint. Studying motion may be applied in any of virtual prototyping, virtual reality or computer animation.

The invention furthermore relates to a computing device for computing the motion over a number of time steps $\delta t$ of a constrained mechanical system comprising multiple bodies, the computing device comprising means for obtaining data relating to a set of Hamiltonian equations of motion for said constrained mechanical system, and means for recursively computing, for each of said number of time steps $\delta t$ , at least position related information of said multiple bodies of said constrained mechanical system based on said set of Hamiltonian equations of motion.

The invention also relates to a computer program product to be utilized with a computer system for studying over a number of time steps $\delta t$ the motion of a constrained mechanical system comprising multiple bodies, the computer program product comprising instruction means for obtaining data relating to a set of Hamiltonian equations of motion for said constrained mechanical system, and instruction means for computing, for each of said number of time steps $\Delta t$, at least position related information of said multiple bodies of said constrained mechanical system based on said set of Hamiltonian equations of motion.

The invention furthermore relates to a machine readable data storage device storing the computer program product to be utilized with a computer system for studying over a number of time steps $\delta t$ the motion of a constrained mechanical system comprising multiple bodies, the computer program product comprising instruction means for obtaining data relating to a set of Hamiltonian equations of motion for said constrained mechanical system, and instruction means for computing, for each of said number of time steps $\delta t$ , at least position related information of said multiple bodies of said constrained mechanical system based on said set of Hamiltonian equations of motion.

The invention also relates to transmission of a computer program product, as described above, over a telecommunications network. The network may be a local area telecommunications network.

The present invention also provides a method for visualising, simulating or predicting motion of a constrained mechanical system having multiple bodies, comprising

- backward recursively calculating a constrained articulated mass matrix for the constrained mechanical system,
- forward recursively calculating time derivatives of generalised coordinates **q** of the constrained mechanical system,
- backward recursively calculating constrained accumulated force vectors, each constrained accumulated force vector expressing an accumulated force on the constrained mechanical system, and
- determining time derivatives of conjugated canonical momenta **p**.

The present invention also provides a computer based system for visualising, simulating or predicting motion, the system comprising:

means for backward recursively calculating a constrained articulated mass matrix for the constrained mechanical system,
means for forward recursively calculating time derivatives of generalised coordinates **q** of the constrained mechanical system,
means for backward recursively calculating constrained accumulated force vectors, each constrained accumulated force vector expressing an accumulated force on the constrained mechanical system, and
means for determining time derivatives of conjugated canonical momenta **p.**

It is an advantage of the method and system for simulating motion of multibody systems according to the present invention that the number of arithmetical operations needed to obtain good simulation results for multibody systems with a high number of bodies, i.e. for example a system having at least 8 bodies, is limited, i.e. reduced compared to prior art techniques.

It is also an advantage of the present invention that it allows to obtain the equations of motion with a good evolution of the constraints violation errors, i.e. with less constraints violation errors than in prior art techniques.

It is furthermore also an advantage of the present invention that the method for closed loop mechanical systems also can be used for open loop mechanical systems by selecting specific values for certain parameters in the simulation method and system.

It is also an advantage of the present invention that it can be used for calculating the forward dynamics of a mechanical system, studying an impact on a mechanical system and studying the contact between different bodies, as bodies in contact can be treated as a multibody system with changing topology.

The teachings of the present invention permit the design of improved methods and systems for simulating the motion of constrained mechanical multibody systems.

These and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

**Brief description of the drawings**

Fig. 1 shows a flow chart for a method of determining a set of equations of motion indicating the different steps performed to obtain a set of Hamiltonian equations for the description of the forward dynamics of a closed loop multibody system according to a first embodiment of the invention.

Fig. 2 is a schematic illustration of an object with a first fixed end joint and a second end joint mounted shiftable along a rod as can be described by a system and method according to embodiments of the present invention.

Fig. 3 is a schematic illustration of an object having a fixed end and a loop as can be described by a system and method according to embodiments of the present invention.

Fig. 4 is a flow chart of the different steps of a method for computing and/or simulating the forward dynamics of a constrained mechanical multibody system, according to a second embodiment of the present invention.

Fig. 5 is a schematic representation of a computer system in accordance with an embodiment of the present invention.

**Description of illustrative embodiments**

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes.

It is to be noticed that the term "comprising", used in the claims, should not be interpreted as being restricted to the means listed thereafter; it does not exclude other elements or steps. Thus, the scope of the expression "a device comprising means A and B" should not be limited to devices consisting only of components A and B. It means that with respect to the present invention, the only relevant components of the device are A and B.

The present invention allows an efficient simulation of constrained mechanical multibody systems. The invention will be focussed on using Hamiltonian formalism in recursive algorithms for the forward dynamics of constrained mechanical multibody systems. In the following, constrained mechanical multibody systems also will be referred to as closed loop mechanical multibody systems. Typically, for closed loop mechanical multibody systems, the topology is studied. In the present application, the terms "constrained multibody systems" and "closed loop systems" are not only used for systems having no open or free ends, but also for systems combining a part of a system having no open ends and a part of a system having one or more open ends. The present invention can also be used for such systems combining constrained mechanical multibody subsystems and unconstrained mechanical multibody systems. For dealing with such systems, these systems are divided into the constrained subsystem, which is studied with a method according to the present invention, and the unconstrained subsystem which may be studied with any suitable method, including the method of the present invention whereby no constraint equations are imposed. In the following, only calculating a constrained system or a constrained subsystem is dealt with.

The number of constraints present in the closed loop mechanical multibody system can be one, two, three or more. The number of constraints depends on the number of bodies and on the type of joints in between the bodies. Furthermore, the mechanical system is not limited to a single loop or to a system that is only constrained at two ends of the multibody system. The constraints may be any kind of kinematic constraint between the bodies, including rheonomic constraints. In the present application, with multibody systems it is meant every mechanical system comprising multiple bodies. The multibody system may be a number of rigid bodies connected by joints or may be a number of free bodies, e.g. in contact with each other, or a combination thereof. The types of joints used in systems comprising connected bodies is not limiting the present invention. The joints can e.g. be rotational joints or translational joints. The present invention is described for bodies wherein no deformation is present, although it may be obvious for a person skilled in the art that extension to deformable bodies can be performed.

The explicit mathematical language that can be used to describe the invention can be e.g. matrix-algebra, vector algebra or the corresponding vector space representation, but the invention is not limited thereto. Other ways of performing the computation according to the embodiments of the present invention can be e.g. by applying neural networks. Furthermore, the formulation of the embodiments of the present invention can be done using different mathematical languages in a single description. Concepts introduced by vector algebra can be equally represented using matrix algebra or using the vector space representation and vice versa. The current description of the embodiments of the present invention is, by way of example, done using vector and matrix algebra. The different physical relations and the constraints with which the mechanical multibody system needs to comply are expressed using equations. Typically the number of equations for describing a constrained system is larger than for describing an unconstrained system. The constraints are expressed by way of a number of constraint equations. In the vector space representation, the constraint equations define a constraint subspace, to (part of) which the solutions of mathematical equations or values of physical quantities need to be restricted if the solutions of the mathematical equations or physical quantities need to be in agreement with the constraints.

In a first embodiment of the present invention, a method is described for determining a set of equations of motion which allow to simulate motion of a constrained multibody system. The method is based on obtaining a Hamiltonian form of the equations of motion of a constrained multibody system. The constraints may involve a closed loop multibody system. The general Hamiltonian form of the equations of motion can be expressed by time derivatives of the generalised co-ordinates **q** and time derivatives of the conjugated canonical momenta **p**:

$$\begin{cases} \dot{\mathbf{q}} = F(\mathbf{q}, \mathbf{p}, t) \\ \dot{\mathbf{p}} = G(\mathbf{q}, \mathbf{p}, t) \end{cases} \tag{5}$$

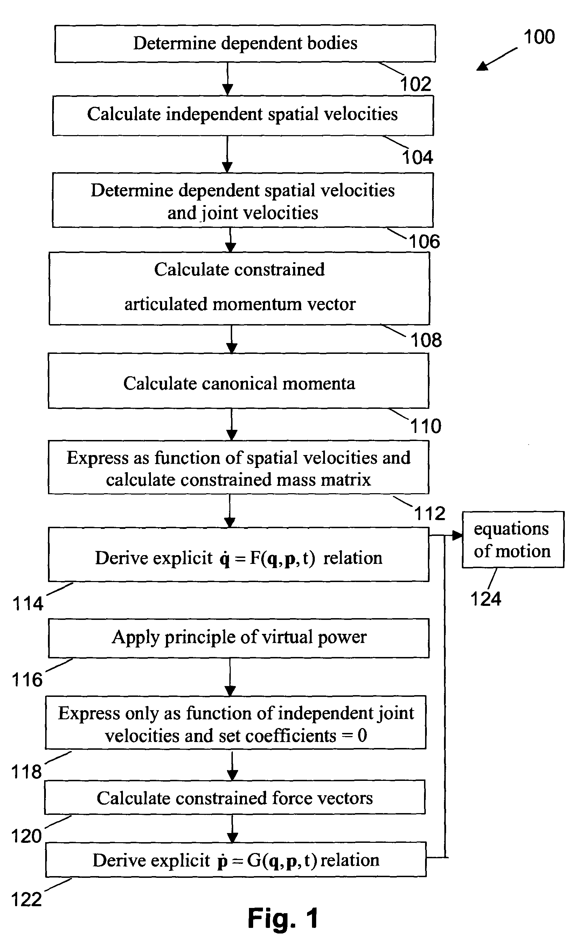

For a multibody system, each of the bodies will be described by an equation for the time derivatives of its generalised co-ordinates **q** and its conjugated canonical momentum **p**. The embodiments of the present invention provide a recursive formulation for the equations of motion such that the dynamics of a constrained mechanical system comprising multiple bodies can be calculated.. An illustration of a possible way to obtain a set of Hamiltonian equations of motion allowing recursive formulation is shown in Fig. 1. The different steps of the method 100 for obtaining the equations of motion are shown in the flow chart in Fig. 1. The method 100 comprises the step of determining the dependent bodies in the multibody system, i.e. step 102, followed by determining expressions for the independent spatial velocities, i.e. step 104, and determining expressions for the dependent spatial velocity and the dependent joint velocity, i.e. step 106. In order to obtain expressions for the first set of equations being part of the equations of motion, i.e. $\dot{\mathbf{q}} = F(\mathbf{q}, \mathbf{p}, t)$ , expressions for the constrained articulated momentum vector are determined, i.e. step 108, which allows to determine expressions for the conjugated canonical momenta, i.e. step 110. The conjugated canonical momenta, i.e. the projection of the articulated constrained momentum vector then is expressed as a function of the spatial velocities, i.e. step 112, leading to determination of the constrained mass matrix. These equations allow to determine explicit relations for the joint velocity $\dot{\mathbf{q}} = F(\mathbf{q}, \mathbf{p}, t)$, i.e. step 114. By expressing the principle of virtual power, i.e. expressing that the reaction forces acting on a mechanical system do not deliver any power under a virtual motion, i.e. step 116, an equation as a function of only independent joint velocities can be obtained, i.e. step 118. Based on the independency of the joint velocities and the fact that such an expression should be valid for any set of virtual velocities, the coefficients of this expression can be set equal to zero. The latter expressions allow to obtain explicit relations $\dot{\mathbf{p}} = F(\mathbf{q}, \mathbf{p}, t)$ , i.e. step 122, whereby the constrained accumulated force vector, present in these relations and function of the momentum vector of corresponding body, is determined using backward recursion, i.e. step 120. Combining $\dot{\mathbf{q}} = F(\mathbf{q}, \mathbf{p}, t)$ and $\dot{\mathbf{p}} = F(\mathbf{q}, \mathbf{p}, t)$ leads to a set of equations of motion [5], i.e. step 124.

In the following, a possible way of applying the different steps of method 100 is given in a more detailed way. It will be obvious for the person skilled in the art that the explicit algorithms for performing the steps of method 100 are only given by way of illustration and that different algorithms for performing any or each step may be applied without leaving the scope of the invention.

In step 102 of the dynamical analysis of constrained multibody systems, the bodies which are considered as dependent bodies in the multibody system are determined. In the present application, a dependent body is defined as a body in the multibody system the conjugated co-ordinates of which are dependent. The number of dependent bodies is determined by the number of constraints and the type of joints, i.e. the number of degrees of freedom of the joints, of these dependent bodies. For example, a pin-joint has a degree of freedom of 1, whereas a spherical joint has a degree of freedom of 3. A valid set of dependent bodies is obtained if the sum of the degrees of freedom of the joints of the dependent bodies is equal to the number of constraints. The number of dependent bodies thus is not fixed, but it depends on the kind of joints of the selected dependent bodies. The numbering of the bodies and the joints is done based on the same principles as this is usually done for open loop systems. The body at the fixed end, i.e. the body connected to the wall, floor, etc. has the lowest number and the bodies are numbered with a higher number if they are closer to a further joint constrained by a constraint of a set of constraints. The further joint can e.g. be the end of a loop, a slideable connection of the multibody system to an environmental feature, etc. The number of further joints is not limited to one in the present application but can be two, three or more.

For a specific body, an outboard body is a body that is positioned closer to the further joint than the body itself, while with inboard body, there is referred to a body that is further away from a further joint than the body under consideration. In other words, the numbering of the bodies and the definition of the outboard and inboard bodies of a certain body can be done as follows. First a base of the system is chosen. This can often be done in different valid ways. Typically, the base is chosen as a body connected to a non-moving reference frame, such as e.g. a wall, a ceiling, etc. The non-moving reference frame itself will get number 0, the base body will get number 1. The base body can have one or more bodies connected to it. If this is the case, the base body is called a parent, and the other body/bodies directly connected to the parent are the children. Children always have a higher number and are adjacent outboard bodies of the parent. Parents always have a lower number as their children and are always inboard bodies compared to these children. A child body K always has one single parent, but can have one or more children bodies connected to it. These one or more children bodies are outboard bodies for child body K, and have a higher identification number than the child body K. The numbering is done until a tip of an open end is reached, until the non-moving reference is reached or till a body is reached that has been numbered already.

In the following steps the transformation matrices $^{K}T^{V}_{K-1}$ and $^{K}T^{F}_{K-1}$ will be used. These transformation matrices are strongly related to each other and express how a spatial velocity vector respectively a spatial force vector changes from point to point. These transformation matrices thus are used to use specific physical quantities described in the reference frame of another body, e.g. body K-1, in the local reference frame of the body under study, e.g. body K. By convention, the reactions from body N are taken with respect to point $\mathbf{O_N}$ on the joint axis. To transmit these reactions to origin $\mathbf{O_K}$, the transformation matrix $^{K}T^{F}_{K-1}$ is defined as

$$^{K}T^{F}_{K-1} = \begin{pmatrix} \mathbf{I} & \mathbf{O} \\ \mathbf{O_K O_N} & \mathbf{I} \end{pmatrix} \qquad [6]$$

In similar way $^{K}T^{V}_{K-1}$ can be defined, whereby $^{K}T^{F}_{N} = \left(^{N}T^{V}_{K-1}\right)^{\mathbf{T}}$. It is to be noted that this matrix is constant in the local reference frame.

In a second step 104, the independent spatial velocities of a body K are expressed as a function of the spatial velocity of the adjacent inboard body. This can e.g. be done by taking the sum of this spatial velocity and the relative velocity.

$$\mathbf{\Omega_K} = {}^{K}T^{V}_{K-1}\mathbf{\Omega_{K-1}} + \mathbf{E_K}\dot{\mathbf{q}}_K \qquad [7]$$

The matrix $\mathbf{E_K}$ thereby is the joint matrix of the Kth body. The column vectors of the joint matrix form a basis for the space of virtual motions. In step 106 the dependent spatial velocities and joint velocities are determined. The spatial velocity of a dependent body are expressed as a function of spatial velocity of the adjacent inboard bodies. This is described in more detail by Anderson and Critchley, in Multibody System Dynamics **9**, (2003) p185-212. The spatial and joint velocities can be e.g. found with following recursion steps:

$$\dot{\mathbf{q}}_K = \mathbf{C}^{\mathbf{T}}_{\mathbf{q_K}} \, {}^{K}T^{V}_{K-1}\left(\mathbf{\Omega_{K-1}} - {}^{K-1}T^{V}_{L}\mathbf{\Omega_L}\right) \qquad [8]$$

$$\mathbf{\Omega_K} = \mathbf{C_K} \, {}^{K}T^{V}_{K-1}\left(\mathbf{\Omega_{K-1}} - {}^{K-1}T^{V}_{L}\mathbf{\Omega_L}\right) + {}^{K}T^{V}_{L}\mathbf{\Omega_L} \qquad [9]$$

with

$$\mathbf{C}_{q_K}^T = -\left(\mathbf{E}_K^{T\ K}\mathcal{T}_{K+1}^F \mathbf{C}_{K+1}^{*\ K+1}\mathcal{T}_K^V \mathbf{E}_K\right)^{-1}\left(\mathbf{E}_K^{T\ K}\mathcal{T}_{K+1}^F \mathbf{C}_{K+1}^{*\ K+1}\mathcal{T}_K^V\right) \qquad [10]$$

$$\mathbf{C}_K = \mathbf{I} + \mathbf{E}_K \mathbf{C}_{q_K}^T \qquad [11]$$

$$\mathbf{C}_K^* = {}^K\mathcal{T}_{K+1}^F \mathbf{C}_{K+1} {}^{K+1}\mathcal{T}_K^V \mathbf{C}_K \qquad [12]$$

K stands for all dependent bodies related to the considered further joint. L is the base body or specific body of the further joint. When that body is the ground, the spatial velocity $\Omega_L$ of body L is zero. In this case, the latter also can be referred to as the spatial velocity $\Omega_C$ of body C whereby C indicates the environment, but the spatial velocity $\Omega_C$ of body C is expressed in a different reference frame than the spatial velocity $\Omega_L$ of body L. The matrix C is the matrix representation of the constraints of the multibody system. It thus is possible to obtain the dependent velocities without direct use of the Jacobian matrix. Using this method, a recursive algorithm for the forward dynamics of closed loop systems will be possible.

The conjugated canonical momenta conjugated to the joint co-ordinates are now further calculated in the following steps. In step 108, the constrained articulated momentum vector is calculated. The momentum vector of a rigid body is defined as

$$\mathbf{P}_K = \mathbf{M}_K \mathbf{\Omega}_K \qquad [13]$$

wherein $M_K$ is the mass of body K and $\Omega_K$ is its spatial velocity. The articulated momentum vector of a body is the sum of the momentum vector of that body and of all outboard bodies reduced to it.

$$\mathbf{P}_K^* = \mathbf{P}_K + \sum_{i \in OB} {}^K\mathcal{T}_i^F \mathbf{P}_i = \mathbf{P}_K + \sum_{j \in AOB} {}^K\mathcal{T}_j^F \mathbf{P}_j^* \qquad [14]$$

Defining the articulated momentum vector for every body of the multibody system whereby OB stands for 'outboard bodies', AOB for 'adjacent outboard bodies'. The constrained articulated momentum vector finally, is defined as:

$$\mathbf{P}_K^c = \mathbf{P}_K + \sum_{j \in AOB} {}^K\mathcal{T}_j^F \mathbf{C}_j^T \mathbf{P}_j^c \qquad [15]$$

The latter expression allows that in the present invention a recursive algorithm for the equations of motion based on the Hamiltonian formalism is obtained. The constrained articulated momentum vector is defined for all bodies K, and is defined as the summation of the momentum vector of the body under study with the projected constrained articulated momentum vectors of all adjacent outboard bodies, whereby the projection is done on the subspace of the constraints, and whereby this quantity is transformed in a quantity in the local reference frame of body K. Bodies K for which $\mathbf{C}_{q_{K+1}}$ = **0** have the same constrained articulated momentum and articulated momentum vectors.

In step 110, the conjugated canonical momenta are calculated. To calculate the conjugated canonical momenta, the partial derivatives of the spatial velocities to the independent co-ordinates are needed. For the independent spatial velocities, one gets:

$$\frac{\partial \mathbf{\Omega}_{K_{ind}}}{\partial \dot{\mathbf{q}}_i} = \mathbf{0} \qquad\qquad i > K \qquad [16]$$

$$\frac{\partial \mathbf{\Omega}_{K_{ind}}}{\partial \dot{\mathbf{q}}_i} = \mathbf{E}_K \qquad\qquad i = K \qquad\qquad [17]$$

$$\frac{\partial \mathbf{\Omega}_{K_{ind}}}{\partial \dot{\mathbf{q}}_i} = {}^K T_{K-1}^V \frac{\partial \mathbf{\Omega}_{K-1}}{\partial \dot{\mathbf{q}}_i} \qquad\qquad\qquad [18]$$

$$\frac{\partial \mathbf{\Omega}_{K_{ind}}}{\partial \dot{\mathbf{q}}_i} = {}^K T_i^V \mathbf{E}_i \qquad\qquad i < K \qquad\qquad [19]$$

As mentioned above, the numbering of the links happens the same way as for open-loop systems, but the further joints are first cut for that purpose. Thus, an outboard always point to a further joint or an open end. As for open-loop systems, an outboard body gets a higher identification number than the body K under study. The numbering may differ if a complex multibody system is described having multiple further joints. For the dependent velocities, following recursive equations hold:

$$\frac{\partial \mathbf{\Omega}_{K_{dep}}}{\partial \dot{\mathbf{q}}_i} = {}^K T_{K-1}^V \frac{\partial \mathbf{\Omega}_{K-1}}{\partial \dot{\mathbf{q}}_i} \qquad\qquad i \leq L \qquad\qquad [20]$$

$$\frac{\partial \mathbf{\Omega}_{K_{dep}}}{\partial \dot{\mathbf{q}}_i} = \mathbf{C}_K \, {}^K T_{K-1}^V \frac{\partial \mathbf{\Omega}_{K-1}}{\partial \dot{\mathbf{q}}_i} \qquad\qquad i > L \qquad\qquad [21]$$

i is always smaller than the identification number of dependent bodies $K_{dep}$, as no partial derivatives with respect to dependent co-ordinates are taken. The conjugated canonical momenta can now be calculated. Taking the definition

$$\mathbf{p}_K = \frac{\partial T}{\partial \dot{\mathbf{q}}_K} = \sum_{i=0}^N \frac{\partial \mathbf{\Omega}_i^T}{\dot{\mathbf{q}}_K} \mathbf{P}_i = \sum_{i=ind} \frac{\partial \mathbf{\Omega}_i^T}{\dot{\mathbf{q}}_K} \mathbf{P}_i + \sum_{i=dep} \frac{\partial \mathbf{\Omega}_i^T}{\partial \dot{\mathbf{q}}_K} \mathbf{P}_i \qquad [22]$$

one gets

$$\mathbf{p}_K = \mathbf{E}_K^T \mathbf{P}_K^c = \sum_{i=0}^N \frac{\partial \mathbf{\Omega}_i^T}{\dot{\mathbf{q}}_K} \mathbf{P}_i \qquad\qquad [23]$$

The conjugated canonical momenta are thus the constrained momentum vectors projected on the joint subspaces. The introduction of the constrained momentum vector will enable the construction of the recursive Hamiltonian algorithm for closed loop systems.

In step 112, the conjugated canonical momenta or the projection of the constrained momentum vectors on the joint subspaces are expressed as function of the spatial velocities. This can be obtained using equation [15] which expresses the constrained momentum vector as a function of the momentum vector of the body and the momentum vectors of the adjacent outboard bodies. The momentum vectors then can be expressed as a function of the mass and the spatial velocity, i.e. using equation [13]. This leads to an expression of the constrained momentum vector as function of the spatial velocity of that body.

In step 114, the expression for the conjugated canonical momenta can be used to derive explicit expressions for the time derivative of the generalised co-ordinate $\dot{\mathbf{q}} = F(\mathbf{q},\mathbf{p},t)$. This is a first set of equations that is part of the Hamiltonian equations of motion.

In the previous steps, half of the Hamiltonian equations were found, namely the ones calculating the time derivatives $\dot{\mathbf{q}}$ of the generalised coordinates. The other half, which calculates the joint velocities, can be found using the constrained momentum vector $\mathbf{P}^c$. This can be done by applying the following steps.

In step 116, the principle of virtual power is applied to the constrained multibody problem. The principle of virtual power states that reaction forces acting on a mechanical system do not deliver any power under a virtual motion. It can be expressed under following form:

$$\sum_i \left[ \mathbf{\Omega}_i^{*T} \left( \dot{\mathbf{P}}_i + \mathbf{\Omega}_i \times \mathbf{P}_i - \mathbf{T}_i \right) \right] = 0 \qquad [24]$$

$\Omega_i^*$ being a virtual spatial velocity, $P_i$ the momentum vector and $T_i$ the spatial external force vector for body i. In other words, the summation of the products of any virtual spatial velocity of a body with the reaction forces acting on that body must be set equal to zero. After expressing the virtual spatial velocities as functions of the co-ordinate velocities and the dependent co-ordinate velocities as functions of the independent ones, above equations can be uncoupled in a set of 2n first order differential equations, n being the number of degrees of freedom (DOF) of the system. A problem arises when using the Jacobian, as it introduces a strong interdependency of these equations, disabling or making difficult the possibility of tailoring a recursive O(n) method. This is why steps 102 to 106 are used in the present method 100.

In step 118, the corresponding equations are expressed only as a function of the independent joint velocities. The coefficients in the thus obtained expressions are set equal to zero.

One can write the principle of virtual power as a function of only independent joint velocities to get an expression of following form:

$$\sum_{i=ind} \mathbf{A}_i \dot{\mathbf{q}}_i^* = 0 \qquad [25]$$

As the considered joint velocities are independent and above expression must hold for any set of virtual velocities, the coefficients $\mathbf{A}_i$ must be equal to zero. This is equivalent to the statement that the partial derivatives of the left hand side of equation [24] relative to the independent virtual joint velocities must be zero.

In step 120, the constrained accumulated force vectors, expressing the total force acting on a body of the multibody system, are defined by a backward recursive equation.

The equations obtained in step 118 are used to derive explicit expressions for the $\dot{\mathbf{p}}$ = F($\mathbf{q}$,$\mathbf{p}$,t) relation, i.e. step 122.

In step 124, combination of the obtained $\dot{\mathbf{q}}$ = F($\mathbf{q}$,$\mathbf{p}$,t) and $\dot{\mathbf{p}}$ = F($\mathbf{q}$,$\mathbf{p}$,t) results in a set of equations of motion. In this way, a Hamiltonian formulation of the equations of motion are defined in a recursive way.

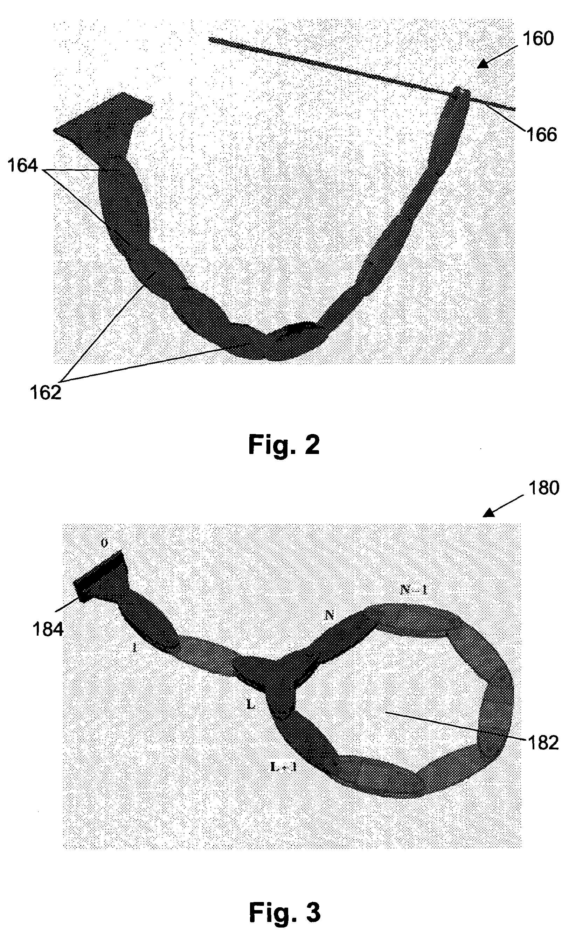

In the following, two explicit examples of the determination of the equations of motion for the simulation of the motion of a constrained multibody system are given. The first example 160 is an illustration for the movement of a planar chain with N chain links 162, whereby a first end of the chain is fixed to a non-moving environment such as e.g. to a wall or a ceiling by means of a joint, for example a pin-joint 164, while the second end of the chain is movably attached, e.g. slidably attached to a fixed rod 166. An example of such a chain is shown in Fig. 2. The second example 180 is an illustration of a planar chain comprising N chain links, and wherein a loop 182 is present. The system is illustrated in Fig. 3.

## EXAMPLE 1

The first example 160 is a planar chain with N links 162, in the example shown in Fig. 2 there are nine links 162; one end is fixed to the non-moving environment by means of a pin-joint 164, and the other end is attached so as to be able to slide along a fixed rod 166. There are N + 2 joint co-ordinates: one for each pin-joint 164 and an additional 2 for the ends of the chain. The number of degrees of freedom (DOF) is N - 1, which means that 3 co-ordinates are to be chosen as dependent. The method described above will now be applied to obtain a set of Hamiltonian equations of motion. One can choose the co-ordinates related to the last body and the constraint as dependent coordinates: $\mathbf{q}_N$ and $\mathbf{q}_c$, the last vector being a vector with 2 co-ordinates. The motion of a rigid body K can be described by the so-called spatial velocity $\Omega_K$.

$$\mathbf{\Omega}_{\mathrm{K}} = \begin{pmatrix} \mathbf{v} \\ \mathbf{\omega} \end{pmatrix}_{\mathrm{K}} \qquad [26]$$

It is possible to express the spatial velocity of a dependent body as a function of the spatial velocity of the adjacent inboard body, as will be shown below:

$$\mathbf{\Omega}_{\mathrm{N}} = \mathbf{C}_{\mathrm{N}}{}^{\mathrm{N}}\mathcal{T}_{\mathrm{N-1}}\mathbf{\Omega}_{\mathrm{N-1}} \qquad [27]$$

The spatial velocity $\Omega_C$ of the environment, which can also be considered as a virtual body, is zero. Thus, the joint velocities of the further joint can be written as a function of the spatial velocity of the last body:

$$\mathbf{\Omega}_{\mathrm{C}} = {}^{\mathrm{C}}\mathcal{T}_{\mathrm{N}}^{\mathrm{V}}\mathbf{\Omega}_{\mathrm{N}} + \mathbf{E}_{\mathrm{C}}\dot{\mathbf{q}}_{\mathrm{C}} = \mathbf{0} \qquad [28]$$

$$\dot{\mathbf{q}}_{\mathrm{C}} = -\left(\mathbf{E}_{\mathrm{C}}^{\mathrm{T}}\mathbf{E}_{\mathrm{C}}\right)^{-1}\mathbf{E}_{\mathrm{C}}^{\mathrm{T}}{}^{\mathrm{C}}\mathcal{T}_{\mathrm{N}}^{\mathrm{V}}\mathbf{\Omega}_{\mathrm{N}} \qquad [29]$$

$$= \mathbf{C}_{\mathbf{q}_{\mathrm{C}}}^{\mathrm{T}} {}^{\mathrm{C}}\mathcal{T}_{\mathrm{N}}^{\mathrm{V}}\mathbf{\Omega}_{\mathrm{N}} \qquad [30]$$

Substitution in equation [28] results in

$$\mathbf{\Omega}_{\mathrm{C}} = \mathbf{C}_{\mathrm{C}} {}^{\mathrm{C}}\mathcal{T}_{\mathrm{N}}^{\mathrm{V}}\mathbf{\Omega}_{\mathrm{N}} = 0 \qquad [31]$$

with

$$\mathbf{C}_{\mathrm{C}} = \mathbf{I} + \mathbf{E}_{\mathrm{C}}\mathbf{C}_{\mathbf{q}_{\mathrm{C}}}^{\mathrm{T}} \qquad [32]$$

The last dependent co-ordinate velocity $\dot{\mathbf{q}}_N$ can also be found as a function of spatial velocity $\Omega_{N-1}$. Indeed, premultiplying equation [31] by $\mathbf{E}_{\mathrm{N}}^{\mathrm{T}}{}^{\mathrm{N}}\mathcal{T}_{\mathrm{C}}^{\mathrm{F}}$ and repeating the procedure gives

$$\mathbf{E}_{\mathrm{N}}^{\mathrm{T}}{}^{\mathrm{N}}\mathcal{T}_{\mathrm{C}}^{\mathrm{F}}\mathbf{C}_{\mathrm{C}}{}^{\mathrm{C}}\mathcal{T}_{\mathrm{N}}^{\mathrm{V}}\left(\mathrm{T}_{\mathrm{N-1}}^{\mathrm{V}}\mathbf{\Omega}_{\mathrm{N-1}} + \mathbf{E}_{\mathrm{N}}\dot{\mathbf{q}}_{\mathrm{N}}\right) = \mathbf{0} \qquad [33]$$

$$\dot{\mathbf{q}}_{\mathrm{N}} = -\left(\mathbf{E}_{\mathrm{N}}^{\mathrm{T}}{}^{\mathrm{N}}\mathcal{T}_{\mathrm{C}}^{\mathrm{F}}\mathbf{C}_{\mathrm{C}}{}^{\mathrm{C}}\mathcal{T}_{\mathrm{N}}^{\mathrm{V}}\mathbf{E}_{\mathrm{N}}\right)^{-1}\left(\mathbf{E}_{\mathrm{N}}^{\mathrm{T}}{}^{\mathrm{N}}\mathcal{T}_{\mathrm{C}}^{\mathrm{F}}\mathbf{C}_{\mathrm{C}}{}^{\mathrm{C}}\mathcal{T}_{\mathrm{N}}^{\mathrm{V}}\right){}^{\mathrm{N}}\mathcal{T}_{\mathrm{N-1}}^{\mathrm{V}}\mathbf{\Omega}_{\mathrm{N-1}} \qquad [34]$$

$$= \mathbf{C}_{\mathbf{q}_{\mathrm{N}}}^{\mathrm{T}} {}^{\mathrm{N}}\mathcal{T}_{\mathrm{N-1}}^{\mathrm{V}}\mathbf{\Omega}_{\mathrm{N-1}} \qquad [35]$$

It is to be noted that matrix $\left(\mathbf{E}_{\mathrm{N}}^{\mathrm{T}}{}^{\mathrm{N}}\mathcal{T}_{\mathrm{C}}^{\mathrm{F}}\mathbf{C}_{\mathrm{C}}{}^{\mathrm{C}}\mathrm{T}_{\mathrm{N}}^{\mathrm{V}}\mathbf{E}_{\mathrm{N}}\right)$ needs to be regular. Singularity would be the consequence of a bad partitioning in independent and dependent co-ordinates. After substitution, one gets

$$\boldsymbol{\Omega}_N = \mathbf{C}_N{}^N\mathcal{T}_{N-1}^V\boldsymbol{\Omega}_{N-1} \tag{36}$$

with

$$\mathbf{C}_N = \mathbf{I} + \mathbf{E}_N\mathbf{C}_{q_N}^T \tag{37}$$

It is to be noted that CC = C, this means that constraint matrix C is a projection operator. **CE = 0,** so **C** lies in the subspace orthogonal to the space **E** of virtual movements.

In the following, for example 1, part of the equations of motion $\dot{\mathbf{p}} = G(\mathbf{q},\mathbf{p},t)$ will be determined.

$\mathbf{q}_c$ and $\mathbf{q}_N$ are dependent co-ordinates. The first encountered independent co-ordinate, starting from the constraint, is $\mathbf{q}_{N-1}$. The only spatial velocities dependent on $\dot{\mathbf{q}}_{N-1}$ are $\Omega_{N-1}$ and $\Omega_N$. Using the principle of virtual power, expressing the equations as functions of the independent co-ordinates and isolating the part in $\dot{\mathbf{q}}_{N-1}$, one gets:

$$\mathbf{E}_{N-1}^T\left(\dot{\mathbf{P}}_{N-1} + \boldsymbol{\Omega}_{N-1}\times\mathbf{P}_{N-1} - \mathbf{T}_{N-1}\right) + \mathbf{E}_{N-1}^T{}^{N-1}\mathcal{T}_N^F\mathbf{C}_N^T\left(\dot{\mathbf{P}}_N + \boldsymbol{\Omega}_N\times\mathbf{P}_N - \mathbf{T}_N\right) = \mathbf{0}$$
$$\tag{38}$$

which gives

$$\dot{\mathbf{P}}_{N-1}^c + \boldsymbol{\Omega}_{N-1}\times\mathbf{P}_{N-1}^c = \mathbf{T}_{N-1}^c \tag{39}$$

with

$$\mathbf{T}_{N-1}^c = \mathbf{T}_{N-1} + {}^{N-1}\mathcal{T}_N^F\mathbf{C}_N^T\mathbf{T}_N + {}^{N-1}\mathcal{T}_N^F\left[\dot{\mathbf{C}}_N^T + \mathbf{C}_N^T(\boldsymbol{\Omega}_N\times\mathbf{I}) - (\boldsymbol{\Omega}_N\times\mathbf{I})\mathbf{C}_N^T\right]\mathbf{P}_N$$
$$\tag{40}$$

The latter is obtained after some tedious calculation. Projection on the joint subspace of equation [39] results in:

$$\dot{\mathbf{p}}_{N-1} = -\mathbf{E}_{N-1}^T\left(\boldsymbol{\Omega}_{N-1}\times\mathbf{P}_{N-1}^c\right) + \mathbf{E}_{N-1}^T\mathbf{T}_{N-1}^c \tag{41}$$

The equation of motion conjugated to the other joints K have the same form as for open-loop systems:

$$\dot{\mathbf{p}}_K = -\mathbf{E}_K^T\left(\boldsymbol{\Omega}_K\times\mathbf{P}_K^c\right) + \mathbf{E}_K^T\mathbf{T}_K^c \tag{42}$$

for which the constrained force vectors are now

$$\mathbf{T}_K^c = \mathbf{T}_K + {}^K\mathcal{T}_{K+1}^F\mathbf{T}_{K+1}^c \tag{43}$$

Equation [42] expresses a first part of the Hamiltonian equations of motion. In equation [42], the values of the constrained force vectors can be obtained through backward recursion using equation [43]. It is to be noted that the constrained force vector is a function of the momentum vector of the $N^{th}$ body. In the following, a second part of the Hamiltonian equations of motion will be determined, i.e. $\dot{\mathbf{q}} = F(\mathbf{q},\mathbf{p},t)$.

The dependent joint velocities $\dot{\mathbf{q}}_C$ and $\dot{\mathbf{q}}_{N-1}$ were found previously in equations [30] and [35]. Consider body N - 1. To find joint velocity $\dot{\mathbf{q}}_{N-1}$, the projection of the constrained momentum vector on the joint axis is needed:

$$\mathbf{p}_{N-1} = \mathbf{E}_{N-1}^T \mathbf{P}_{N-1}^c = \mathbf{E}_{N-1}^T \left( \mathbf{P}_{N-1} + {}^{N-1}\mathcal{T}_N^F \mathbf{C}_N^T \mathbf{P}_N \right) \quad [44]$$

Each term needs to be expressed as function of $\Omega_{N-1}$. One gets

$$\mathbf{P}_{N-1} = \mathbf{M}_{N-1}\mathbf{\Omega}_{N-1} \quad [45]$$

$$\mathbf{P}_N = \mathbf{M}_N \mathbf{C}_N {}^N\mathcal{T}_{N-1}^V \mathbf{\Omega}_{N-1} \quad [46]$$

The constrained momentum vector becomes:

$$\mathbf{P}_{N-1}^c = \mathbf{P}_{N-1} + {}^{N-1}\mathcal{T}_{N-1}^F \mathbf{C}_N^T \mathbf{P}_N \quad [47]$$

$$= \left( \mathbf{M}_{N-1} + {}^{N-1}\mathcal{T}_N^F \mathbf{C}_N^T \mathbf{M}_N \mathbf{C}_N {}^N\mathcal{T}_{N-1}^V \right)\mathbf{\Omega}_{N-1} \quad [48]$$

$$= \mathbf{M}_{N-1}^c \mathbf{\Omega}_{N-1} \quad [49]$$

$$\mathbf{M}_{N-1}^c = \mathbf{M}_{N-1} + {}^{N-1}\mathcal{T}_N^F \mathbf{C}_N^T \mathbf{M}_N \mathbf{C}_N {}^N\mathcal{T}_{N-1}^V \quad [50]$$

$\mathbf{M}_{N-1}^c$ being the constrained mass matrix. The constrained mass matrix relates the spatial velocity of a body to its constrained momentum vector. It can be seen as an extension of the concept of mass for a point to the concept mass matrix for a single rigid body, and the extension of the concept mass matrix for a single rigid body to a set of constrained interconnected bodies. From above equation, the joint velocity $\dot{\mathbf{q}}_{N-1}$ can be obtained:

$$\mathbf{p}_{N-1} = \mathbf{E}_{N-1}^T \mathbf{P}_{N-1}^c = \mathbf{E}_{N-1}^T \mathbf{M}_{N-1}^c \left( {}^{N-1}\mathcal{T}_{N-2}^V \mathbf{\Omega}_{N-2} + \mathbf{E}_{N-1}\dot{\mathbf{q}}_{N-1} \right) \quad [51]$$

$$\dot{\mathbf{q}}_{N-1} = \left( \mathbf{E}_{N-1}^T \mathbf{M}_{N-1}^c \mathbf{E}_{N-1} \right)^{-1} \left( \mathbf{p}_{N-1} - \mathbf{E}_{N-1}^T \mathbf{M}_{N-1}^c {}^{N-1}\mathcal{T}_{N-2}^V \mathbf{\Omega}_{N-2} \right) \quad [52]$$

$$= \mathbf{M}_{j_{N-1}}^{c^{-1}} \left( \mathbf{p}_{N-1} - \mathbf{E}_{N-1}^T \mathbf{M}_{N-1}^c {}^{N-1}\mathcal{T}_{N-2}^V \mathbf{\Omega}_{N-2} \right) \quad [53]$$

To obtain the next joint velocity $\dot{\mathbf{q}}_{N-2}$, one needs to express $\mathbf{P}_{N-1}^c$ as a function of $\Omega_{N-1}$.

$$\mathbf{P}^{c}_{N-1} = \mathbf{M}^{c}_{N-1}\left( {}^{N-1}\mathcal{T}^{V}_{N-2}\mathbf{\Omega}_{N-2} + \mathbf{E}_{N-1}\dot{\mathbf{q}}_{N-1}\right) \qquad [54]$$

$$= \mathbf{M}^{c}_{N-1}\left( {}^{N-1}\mathcal{T}^{V}_{N-2}\mathbf{\Omega}_{N-2} + \mathbf{E}_{N-1}\mathbf{M}^{c^{-1}}_{j_{N-1}}\left(\mathbf{p}_{N-1} - \mathbf{E}^{T}_{N-1}\mathbf{M}^{c}_{N-1}\,{}^{N-1}\mathcal{T}^{V}_{N-2}\mathbf{\Omega}_{N-2}\right)\right)$$

$$[55]$$

$$= \mathbf{M'}_{N-1}\,{}^{N-1}\mathcal{T}^{V}_{N-2}\mathbf{\Omega}_{N-2} + \mathbf{D'}_{N-1} \qquad [56]$$

$$\mathbf{M'}_{N-1} = \mathbf{M}^{c}_{N-1} - \mathbf{M}^{c}_{N-1}\mathbf{E}_{N-1}\mathbf{M}^{c^{-1}}_{j_{N-1}}\mathbf{E}^{T}_{N-1}\mathbf{M}^{c}_{N-1} \qquad [57]$$

$$\mathbf{D'}_{N-1} = \mathbf{M}^{c}_{N-1}\mathbf{E}_{N-1}\mathbf{M}^{c^{-1}}_{j_{N-1}}\mathbf{p}_{N-1} \qquad [58]$$

which is of the same form as for open-loop systems. The remaining joint velocities K can thus be calculated the same way.

Equation [52] illustrates how the Hamiltonian equations of motion for the derivative of the generalised co-ordinates can be obtained, whereby a backward recursion for the constrained mass matrices is needed, expressed by equation [50]. All other Hamiltonian equations of motion for the derivative of the generalised co-ordinate can be obtained by applying forward recursion as is expressed by equations [44] to [58].

Thus, the Hamiltonian equations are determined for example 1, formulated in a recursive way.

### EXAMPLE 2

Consider the next example. It is a planar chain with a loop. This system has N - 2 degrees of freedom, closing the loop introduces 2 additional constraints and one extra joint, which will be described by joint velocity (vector) $\dot{\mathbf{q}}_{C}$. As a consequence, there are 3 dependent co-ordinates. Body C and body L are basically the same, but a different local reference frame is used. The procedure for obtaining the dependent spatial velocities is similar to that used in previous example. Body C has spatial velocity:

$$\mathbf{\Omega}_{C} = {}^{C}\mathcal{T}^{V}_{N}\mathbf{\Omega}_{N} + \mathbf{E}_{C}\dot{\mathbf{q}}_{C} = {}^{C}\mathcal{T}^{V}_{L}\mathbf{\Omega}_{L} \qquad [59]$$

The relationship between $\Omega_{C}$ and $\Omega_{L}$ is described by the velocity field in the rigid body. After projection on subspace $\mathbf{E}_{C}$ , one gets:

$$\dot{\mathbf{q}}_{C} = -\left(\mathbf{E}^{T}_{C}\mathbf{E}_{C}\right)^{-1}\mathbf{E}^{T}_{C}\,{}^{C}\mathcal{T}^{V}_{N}\left(\mathbf{\Omega}_{N} - {}^{N}\mathcal{T}^{V}_{L}\mathbf{\Omega}_{L}\right)$$

$$[60]$$

$$= \mathbf{C}^{T}_{\mathbf{q}_{C}}\,{}^{C}\mathcal{T}^{V}_{N}\left(\mathbf{\Omega}_{N} - {}^{N}\mathcal{T}^{V}_{L}\mathbf{\Omega}_{L}\right) \qquad [61]$$

Substitution in equation [59] results in

$$\mathbf{C}_{C}\,{}^{C}\mathcal{T}^{V}_{N}\left(\mathbf{\Omega}_{N} - {}^{N}\mathcal{T}^{V}_{L}\mathbf{\Omega}_{L}\right) = \mathbf{0} \qquad [62]$$

with

$$\mathbf{C}_C = \mathbf{I} + \mathbf{E}_C \mathbf{C}_{q_C}^T \qquad [63]$$

This procedure can be repeated recursively for all dependent bodies. The next body N gives (premultiplying by $\mathbf{E}_N^{T\ N}\mathcal{T}_C^F$, this time)

$$\dot{\mathbf{q}}_N = -\left(\mathbf{E}_N^{T\ N}\mathcal{T}_{N+1}^F \mathbf{C}_C{}^C\mathcal{T}_N^V \mathbf{E}_N\right)^{-1}\left(\mathbf{E}_N^{T\ N}\mathcal{T}_C^F \mathbf{C}_C{}^C\mathcal{T}_N^V\right)^N\mathcal{T}_{N-1}^V\left(\boldsymbol{\Omega}_{N-1} - {}^{N-1}\mathcal{T}_L^V \boldsymbol{\Omega}_L\right) \qquad [64]$$

$$= \mathbf{C}_{q_N}^T {}^N\mathcal{T}_{N-1}^V\left(\boldsymbol{\Omega}_{N-1} - {}^{N-1}\mathcal{T}_L^V \boldsymbol{\Omega}_L\right) \qquad [65]$$

After substitution in equation [59], one gets

$$\boldsymbol{\Omega}_N = \mathbf{C}_N{}^N\mathcal{T}_{N-1}^V\left(\boldsymbol{\Omega}_{N-1} - {}^{N-1}\mathcal{T}_L^V \boldsymbol{\Omega}_L\right) + {}^N\mathcal{T}_L^V \boldsymbol{\Omega}_L \qquad [66]$$

with

$$\mathbf{C}_N = \mathbf{I} + \mathbf{E}_N \mathbf{C}_{q_N}^T \qquad [67]$$

There is one more dependent co-ordinate to find. Substitution of [66] in [62] and premultiplying by ${}^N\mathbf{T}_C^F$ results in

$$\boldsymbol{\Omega}_N = \mathbf{C}_N^*{}^N\mathcal{T}_{N-1}^V\left(\boldsymbol{\Omega}_{N-1} - {}^{N-1}\mathcal{T}_L^V \boldsymbol{\Omega}_L\right) = \mathbf{0} \qquad [68]$$

with

$$\mathbf{C}_N^* = {}^N\mathcal{T}_C^F \mathbf{C}_C{}^C\mathcal{T}_N^V \mathbf{C}_N = \boldsymbol{\Lambda}_N \mathbf{C}_N \qquad [69]$$

which is a symmetrical matrix. Further calculations yield:

$$\dot{\mathbf{q}}_{N-1} = \mathbf{C}_{q_{N-1}}^T {}^{N-1}\mathcal{T}_{N-2}^V\left(\boldsymbol{\Omega}_{N-2} - {}^{N-2}\mathcal{T}_L^V \boldsymbol{\Omega}_L\right) \qquad [70]$$

$$\boldsymbol{\Omega}_{N-1} = \mathbf{C}_{N-1}{}^{N-1}\mathcal{T}_{N-2}^V\left(\boldsymbol{\Omega}_{N-2} - {}^{N-2}\mathcal{T}_L^V \boldsymbol{\Omega}_L\right) + {}^{N-1}\mathcal{T}_L^V \boldsymbol{\Omega}_L \qquad [71]$$

with

$$\mathbf{C}_{q_{N-1}}^T = -\left(\mathbf{E}_{N-1}^T {}^{N-1}\mathcal{T}_N^F \mathbf{C}_N^* {}^N\mathcal{T}_{N-1}^V \mathbf{E}_{N-1}\right)^{-1}\left(\mathbf{E}_{N-1}^T {}^{N-1}\mathcal{T}_N^F \mathbf{C}_N^* {}^N\mathcal{T}_{N-1}^V\right) \qquad [72]$$

$$\mathbf{C}_{N-1} = \mathbf{I} + \mathbf{E}_{N-1}\mathbf{C}_{q_{N-1}}^{\mathbf{T}} \qquad \text{[73]}$$

The constraints matrices $\mathbf{C}^*$ and $\mathbf{C}_q^{\mathbf{T}}$ are found through a backward recursion step, the joint and spatial velocities through a forward recursion step. As soon as the spatial velocity $\Omega_L$ of the base of the loop is known, the dependent spatial velocities can be calculated.

A first part of the Hamiltonian equations of motion, i.e. $\dot{\mathbf{p}} = G(\mathbf{q},\mathbf{p},t)$ , can be determined as follows, in a similar way as in example 1. The first independent body starting from the constraint is now N - 2. One gets, by considering the bodies N, N-1 and N - 2:

$$\mathbf{E}_{N-2}^{\mathbf{T}}\left(\dot{\mathbf{P}}_{N-2} + \mathbf{\Omega}_{N-2} \times \mathbf{P}_{N-2} - \mathbf{T}_{N-2}\right) +$$
$$\mathbf{E}_{N-2}^{\mathbf{T}}{}^{N-2}\mathcal{T}_{N-1}^{F}\mathbf{C}_{N-1}^{\mathbf{T}}\left(\dot{\mathbf{P}}_{N-1}^{c} + \mathbf{\Omega}_{N} \times \mathbf{P}_{N-1} - \mathbf{T}_{N-1}^{c}\right) = \mathbf{0} \qquad \text{[74]}$$

which gives

$$\dot{\mathbf{P}}_{N-2}^{c} + \mathbf{\Omega}_{N-2} \times \mathbf{P}_{N-2}^{c} = \mathbf{T}_{N-2}^{c} \qquad \text{[75]}$$

Projection of equation [75] results in an expression for the time derivative of the conjugated canonical momentum, similar to equations [41] and [42]. The other loop bodies, till body L, are treated the same way as in the first example. In the constraint base body L, the reaction forces and torques due to the closing of the chain balance each other. From that body on, the chain can be treated as an open-loop system.

Determination of equations of motion part $\dot{\mathbf{q}} = F(\mathbf{q},\mathbf{p},t)$ can be performed in the same way as in previous example, thus allowing to obtain the second part of Hamiltonian equations. In this way, the full description of the system using a Hamiltonian formalism with recursive formulas is obtained.

It is an advantage of the embodiments of the present invention that no recursive step is necessary for the acceleration, as is necessary for the acceleration based procedures.

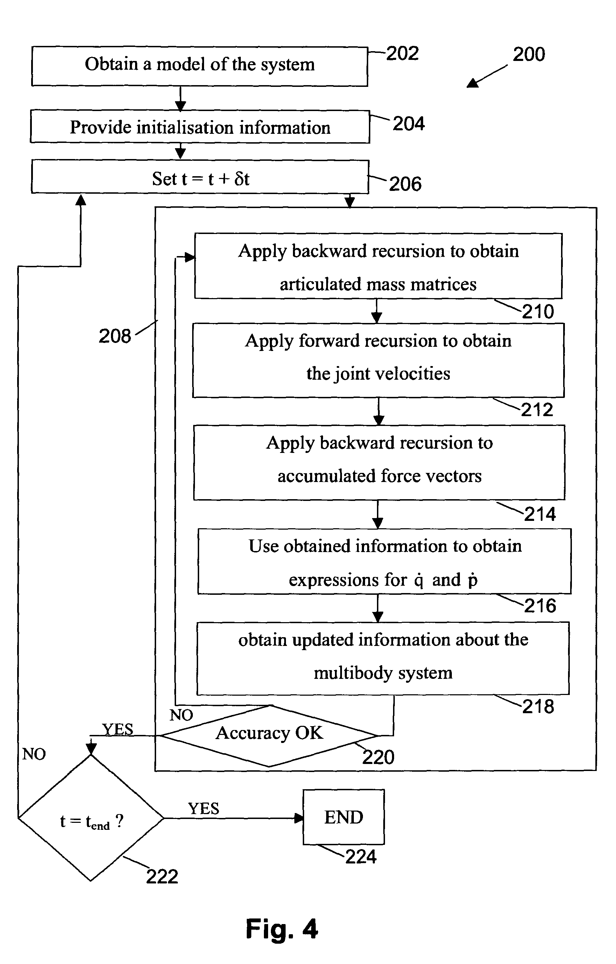

In a second aspect, the present invention relates to a method for determining the dynamics of a constrained multibody system. The method comprises obtaining a model for the dynamics of the system e.g. by obtaining the equations of motion for the constrained multibody system and applying these equations of motion such that the dynamics of the constrained multibody system can be calculated over a certain time frame. The method is illustrated in Fig. 4, where the different steps of the method of the present embodiment are indicated.

In a first step 202, a model for the dynamics of the system is obtained e.g. by obtaining the Hamiltonian formulation of the equations of motion, which express the time derivatives of the generalised co-ordinates and of the conjugated canonical momenta. These equations can be obtained for example by inputting the data using previously stored data or by calculating these equations using the method as described in the previous embodiment. The equations furthermore can be obtained immediately for the specific situation of the multibody system to be studied, or the equations can be obtained in a more general form, whereby specific non-dynamics oriented parameters characterising the multibody system still need to be supplied by the user. If equations are calculated at run time, first information is obtained of the topology of the system, the kind of joints, the mass, inertia and geometrical properties of the multibody system. Obtaining the equations of motion can be performed by loading pre-compiled equations of motion of the system or alternatively by setting up these equations at run-time. The exact method of how these equations are obtained is not limiting the present invention. These equations, as already described above, are given by

$$\dot{\mathbf{q}} = F(\mathbf{q},\mathbf{p},t) \qquad \text{[76]}$$

and

$$\dot{\mathbf{p}} = G(\mathbf{q}, \mathbf{p}, t) \qquad\qquad [77]$$

In a second step 204, the parameters needed to perform the calculations are provided. These parameters may e.g. comprise initial conditions of the system with amongst others the initial time t = $t_i$, and termination conditions, i.e. a time period $\Delta t$ associated with the mechanical systems for which the calculations need to be performed. Other initial values, e.g. initial position, describing the known state of the system at the start of the calculation also may be provided. Other parameters that may be provided are the forces and torques that are applied on the system, such as e.g. gravity and actuation. Providing these parameters will allow determining the dynamics of the constrained mechanical multibody system.

In step 206, the time t is augmented with a time step $\delta t$ such that in the following steps the calculation, based on the initial information or the information obtained in the previous cycle(s), can be obtained for a new time t. The time step $\delta t$ used for calculating the forward dynamics is mainly determined by the specific application for which the calculations are performed, on the constrained mechanical multibody system that is described and on the computing power of the computer system used for performing these calculations. The time steps $\delta t$ that can be used in the methods and systems of the present application can be at least the same as the time steps used in other types of calculations, but furthermore exceed this range, as the number of calculations needed is smaller than in other types of calculations, which allows a smaller time step for computing the same time period $\Delta t$ in the same computing time. Alternatively, the time steps $\delta t$ also may be larger than in other types of calculations as the degree of convergence in the calculation methods and systems of the present invention is larger than for other prior art systems. Method 200 then proceeds to step 208.

In step 208, the calculations are performed to obtain the dynamics of the constrained mechanical multibody system under study at time t. This step comprises different calculations, based on the obtained Hamiltonian equations of motion and on the definition of several quantities used to determine the Hamiltonian equations of motion. The results allow to obtain the parameters that completely characterise the constrained mechanical multibody system, based on a recursive formulation of the Hamiltonian equations of motion. The latter allows a high efficiency of the algorithms, allowing to reduce the amount of computing power needed. The method furthermore decreases the number of constraints violation errors. A possible way of calculating explicit values for the parameters characterising the constrained mechanical multibody system is shown in steps 210 to step 220, although the invention is not limited to this specific way of calculating.

In step 210, a backward recursive step is applied to obtain the constrained articulated mass matrices, which are needed to determine the joint velocities $\dot{\mathbf{q}}_{\mathbf{K}}$. The latter is e.g. illustrated in example 1, equation [53], indicating that the constrained articulated mass matrix $\mathbf{M}_{\mathbf{K}}^{\mathbf{c}}$ is present in the formula for $\dot{\mathbf{q}}_{\mathbf{K}}$. The constrained articulated mass matrices can be found recursively, whereby the constrained articulated mass of the $N^{th}$ body $\mathbf{M}_{\mathbf{N}}^{\mathbf{c}}$ is equal to the mass of the $N^{th}$ body $M_N$ and whereby the constrained articulated mass for the $K^{th}$ body $\mathbf{M}_{\mathbf{K}}^{\mathbf{c}}$ is backward recursively found for K = N - 1 to K = 1 based on the constrained articulated mass of bodies with a higher identification number K. The equation describing the backward recursive determination of the constrained articulated mass matrices is given by equation [50].

In step 212, the time derivatives of the joint velocities $\dot{\mathbf{q}}_{\mathbf{K}}$ are determined using a forward recursive step, as provided in step 202 by equations [76]. A practical example of the equations for obtaining $\dot{\mathbf{q}}_{\mathbf{K}}$ is shown by equations [44] to [58] in example 1. The constrained articulated mass matrices present in these equations are determined in step 210. In this way, the time derivatives of the generalised co-ordinates, corresponding with the first part of the Hamiltonian equations of motion, are obtained.

In step 214, the constrained accumulated force vectors are determined using a backward recursive step. Examples of equations used for this backward recursive step are equations [43] as determined for example 1. In this way the constrained accumulated force vectors are obtained. The constrained accumulated force vectors require a separate recursion step as the constrained accumulated force vector is dependent on a momentum vector.

In step 216, the time derivatives of the canonical momenta conjugated to the generalised co-ordinates are determined using equation [77] as obtained in step 202. A practical illustration of these equations can be obtained from example 1, in equations [39] to [43]. Values for the constrained accumulated force vectors, present in equation [42], are introduced based on the calculations performed in step 214. In this way results are obtained corresponding with the second part of the Hamiltonian equations of motion.

In step 218, the parameters necessary to completely characterise the constrained mechanical multibody system at time t are determined over a number of cycles. This allows to obtain information for the constrained mechanical multibody system, e.g. about the path of the different bodies, about a possible impact or about the bodies being in contact or not. These results can be either stored or outputted or displayed immediately. The obtained results typically are applied in the field of virtual prototyping, virtual reality, computer animation and avionics, although the invention is not limited to these applications. Virtual prototyping allows to simulate tests for prototype multibody systems, without the need for producing real prototype systems. The latter has major advantages as it reduces both the temporal cost and the financial cost. Some examples of applications in the field of virtual prototyping are performing dynamical simulations of a car on a road, studying alternative designs for cars, robots, etc., simulation of robot legs, predicting alternative behaviour upon change of a component or an environmental factor, etc. Another application is the determination of optimal mass compensation, i.e. active vibration, in e.g. a spacecraft. For virtual reality, the results of the calculations typically are read out quickly as there is the need to obtain real-time representation. Typical applications for virtual reality are games or systems that allow to feel the physical effects of what is simulated, such as the effect of being present in a moving object, such as a car. Applications also can be found in the field of computer animation, i.e. for visualising at least an approximation design of a physical system which is a multibody system. The latter is e.g. used for animation in games, e.g. displaying people running.

In decision step 220 it will be determined whether the accuracy and the stability of the system are sufficiently high or whether repetition of steps 210 to 218 is necessary. The numerical integrator running the recursive steps typically runs the recursive steps more than once to ensure the accuracy and stability. If the accuracy and stability are sufficiently high, method 200 proceeds to step 222. If not, steps 210 to 218 are repeated by the numerical integrator. Instead of applying a decision step 220 and thus providing a feedback loop, it is also possible to use a fixed number of runs of steps 210 to 218.

In decision step 222 it will be determined if further calculation of the forward dynamics of the constrained mechanical multibody system is necessary, i.e. if the full calculation of the forward dynamics of interest is already performed. If the current time equals an end time tend, the calculations are ended and method 200 proceeds to ending step 224. The end time $t_{end}$ may be a predetermined value or may depend on the degree of divergence of the calculations. Alternatively, the end time also may be determined by the occurrence of a specific event. If the end time has not been reached yet, method 200 proceeds to step 206 and a new calculation cycle is restarted after the time has been augmented with $\delta t$.

In a third aspect, the invention also relates to a system for determining the motion of a constrained mechanical system comprising multiple bodies. The system thus is adjusted for performing the method as described in the second embodiment of the present invention. The motion is determined over a number of time steps $\delta t$ such that the dynamics of the system over a time period $\Delta t$ is obtained. The system comprises a computing system that is adjusted with a means for obtaining at least data related to a set of Hamiltonian equations of motion for the constrained mechanical multibody system under study and a means for computing at least position related information of the multiple bodies of the constrained mechanical system over a time period $\Delta t$. The means for obtaining at least data related to a set of Hamiltonian equations of motion may also comprise means for receiving data about the initial state of the mechanical multibody system and about the termination conditions for the calculation. The means for computing performs these calculations for an initial time $t_i$ and for subsequent times t obtained by adding a time step $\delta t$ to the initial time $t_i$. The time step does not need to be constant but can be adjusted e.g. depending on the density of information needed during different parts of the time period $\Delta t$. The system may be any type of computer system having significant computing power to obtain the calculations within a reasonable time and may e.g. be a personal computer, a number of computers grouped in a network, a mainframe, etc. and the calculations may be performed subsequently one task after the other in a single processor or may be performed in parallel, i.e. using distributed processing over a number of processors. For the latter, the different calculations of the method can be divided over the processors such that the necessary information needed by specific processors is always available at these processors or so that the processors are instructed to wait with further processing until the needed information has arrived.

In accordance with the above described embodiments, the present invention also includes a computer program product which provides the functionality of any of the methods according to the present invention when executed on a computing system. Further, the present invention includes a data carrier such as a CD-ROM or a diskette which stores the computer product in a machine readable form and which executes at least one of the methods of the invention when executed on a computing device. Nowadays, such software is often offered on the Internet, hence the present invention includes transmitting the computer product according to the present invention over a local or wide area network.

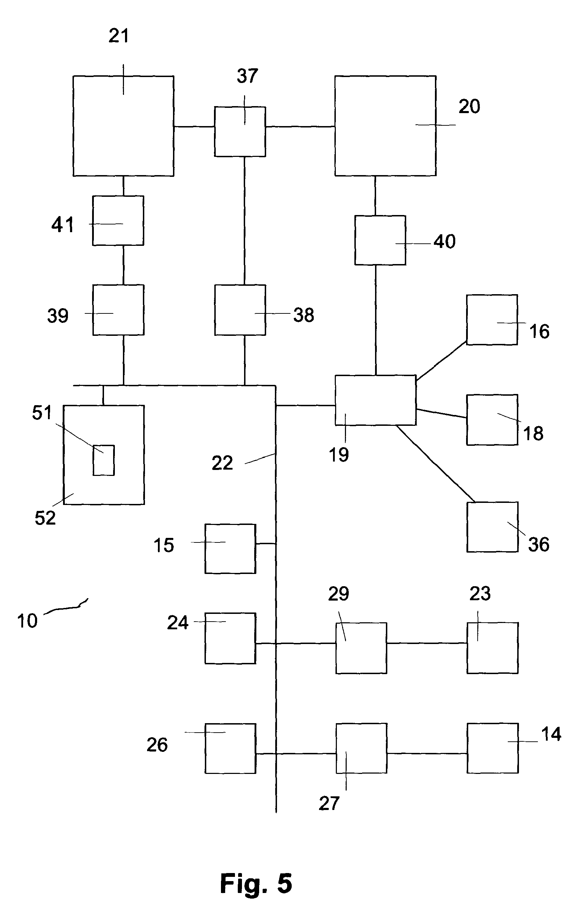

Fig. 5 is a schematic representation of a computing system which can be utilized with the methods and in a system according to the present invention. A computer 10 is depicted which may include a video display terminal 14, a data input means such as a keyboard 16, and a graphic user interface indicating means such as a mouse 18. Computer 10 may be implemented as a general purpose computer, e.g. a UNIX workstation or a personal computer.

Computer 10 includes a Central Processing Unit ("CPU") 15, such as a conventional microprocessor of which a Pentium IV processor supplied by Intel Corp. USA is only an example, and a number of other units interconnected via system bus 22. The computer 10 includes at least one memory. Memory may include any of a variety of data storage devices known to the skilled person such as random-access memory ("RAM"), read-only memory ("ROM"), nonvolatile read/write memory such as a hard disc as known to the skilled person. For example, computer 10 may further include random-access memory ("RAM") 24, read-only memory ("ROM") 26, as well as an optional display adapter 27 for connecting system bus 22 to the optional video display terminal 14, and an optional input/output (I/O) adapter 29 for connecting peripheral devices (e.g., disk and tape drives 23) to system bus 22. Video display terminal 14 can be the visual output of computer 10, which can be any suitable display device such as a CRT-based video display well-known in the art of computer hardware. However, with a portable or notebook-based computer, video display terminal 14 can be replaced with a LCD-based or a gas plasma-based flat-panel display. Computer 10 further includes user interface adapter 19 for connecting a keyboard 16, mouse 18, optional speaker 36, as well as allowing optional inputs from an external system 20. The inputs can be, for example physical value inputs from physical value capture devices such as sensors 40 attached to a robot which send information about the position of a multibody system comprised in the physical system 20. The sensors 40 may be any suitable sensors for capturing physical parameters of system 20.

System 20 may also be a remote control device, e.g. located on earth whereas computer system 10 is located in a multibody system, e.g. in a transport vehicle/robot on a planet. Due to the delay between earth and the planet the robot cannot be controlled in real time. In such a situation, computer programs running on computer system 10 implement methods in accordance with the present invention to simulate or predict the behaviors of the multibody system. This can be used to control the multibody system in real time safely in between receiving commands from earth.

Additionally or alternative actuators 41 may be provided for an additional or alternative physical system 21 which may also be connected to bus 22 via a communication adapter 39 connecting computer 10 to a data network such as the Internet, an Intranet a Local or Wide Area network (LAN or WAN) or a CAN. This allows transmission of commands from computer system 10 over a telecommunications network, from a near location to a remote location, e.g. via the Internet or a radio connection, to the remote system 21. For example, the sensors 40 may pick up states of the system 20 which are input to computer system 10. Using methods in accordance with any of the methods of the present invention, computer system 10 predicts the behavior of system 20 and sends commands to actuators 41 in system 21 to modify this behavior. An example, could be vibration sensing using sensors 40 and commands for active damping being provided to actuators 41 of a shakers in system 21 to neutralize the vibration; The calculation of the commands to be sent to the actuators computer system 10 uses methods of the present invention to predict the behavior of system 20 when acted on by the actuators of system 21.

The terms "physical value capture device" or "sensor" includes devices which provide values of parameters of a physical system to be simulated. The sensors may include devices for transmitting details of evolving physical systems. The present invention also includes within its scope that the relevant physical values are input directly into the computer using the keyboard 16 or from storage devices such as 23.

A parameter control unit 37 of system 20 and/or 21 may also be connected via a communications adapter 38. Parameter control unit 37 may receive an output value from computer 10 running a computer program in accordance with the present invention or a value representing or derived from such an output value and may be adapted to alter a parameter of physical system 20 and/or system 21 in response to receipt of the output value from computer 10.

Computer 10 also may include a graphical user interface that resides within machine-readable media to direct the operation of computer 10. Any suitable machine-readable media may retain the graphical user interface, such as a random access memory (RAM) 24, a read-only memory (ROM) 26, a magnetic diskette, magnetic tape, or optical disk (the last three being located in disk and tape drives 23). Any suitable operating system and associated graphical user interface (e.g., Microsoft Windows) may direct CPU 15. In addition, computer 10 includes a control program 51 which resides within computer memory storage 52. Control program 51 contains instructions that when executed on CPU 15 cany out the operations described with respect to any of the methods of the present invention.

In other embodiments computer system 10 can be used to visualize (on display unit 14) predicted or simulated behaviors of a physical system using any of the methods of the present invention. Physical system 20 and/or 21 with the relevant connections may constitute a simulator in which persons can experience a simulated behavior of a multibody system, in which actions of the persons, e.g. via a joy stick result in predicted changes of the multibody system. These changes can be displayed on the display unit 14 and commands may be sent to actuators 41 to move the simulator in the predicted way. This gives a real-life effect to the person in the simulator as is generally known to the skilled person of large scale simulators.

Those skilled in the art will appreciate that the hardware represented in Fig. 5 may vary for specific applications. For example, other peripheral devices such as optical disk media, audio adapters, or chip programming devices, such as PAL or EPROM programming devices well-known in the art of computer hardware, and the like may be utilized in addition to or in place of the hardware already described.

In the example depicted in Fig. 5, the computer program product (i.e. control program 51) can reside in computer storage 52. However, it is important that while the present invention has been, and will continue to be, described accordingly, those skilled in the art will appreciate that the mechanisms of the present invention are capable of being distributed as a program product in a variety of forms, and that the present invention applies equally regardless of the particular type of signal bearing media used to actually carry out the distribution. Examples of computer readable signal bearing media include: recordable type media such as floppy disks and CD ROMs and transmission type media such as digital and analogue communication links.

Other arrangements for accomplishing the objectives of the method and system for simulating the motion of a multibody mechanical system embodying the invention will be obvious for those skilled in the art. It is to be understood that although preferred embodiments, specific constructions and configurations, have been discussed herein for devices according to the present invention, various changes or modifications in form and detail may be made without departing from the scope and spirit of this invention.

**Claims**

1.   A method of using equations of motion of a constrained mechanical system comprising multiple bodies to calculate at least position related information of the constrained mechanical system,
      wherein said equations of motion are recursively formulated Hamiltonian equations of motion, further comprising calculating at least position related information of the constrained mechanical system from the equations and boundary conditions for the system.

2.   A method according to claim 1, said constrained mechanical system being constrained by a set of constraints defining a constraint subspace, the constrained mechanical system furthermore comprising at least one fixed joint and at least one further joint constrained by at least one constraint of the set of constraints, the method comprising,

      - for each $K^{th}$ body of the constrained mechanical system,
      - determining a quantity related to a constrained articulated momentum vector of said $K^{th}$ body, said constrained articulated momentum vector of said $K^{th}$ body being the sum of a momentum vector of the $K^{th}$ body of the system and the projected constrained articulated momentum vectors of adjacent bodies that are located closer to said at least one further joint, said projected constrained articulated momentum vectors being projected on said constraint subspace and referring to a local reference frame of the $K^{th}$ body,
      - using said quantities related to said constrained articulated momentum vectors for obtaining a set of Hamiltonian equations of motion for said constrained mechanical system.

3.   A method according to claim 2, wherein said obtaining a set of Hamiltonian equations of motion comprises, for generalized coordinates **q**, conjugated canonical momenta **p**, and time t, obtaining expressions for the time derivatives of the generalized coordinates **q** and the time derivatives of the conjugated canonical momenta **p**

$$\dot{\mathbf{q}} = F(\mathbf{q}, \mathbf{p}, t)$$

$$\dot{\mathbf{p}} = G(\mathbf{q}, \mathbf{p}, t)$$

4.   A method according to claim 3, wherein these expressions for the time derivatives determine the motion of each of said multiple bodies.

5.   A method according to any of claims 2 to 4, wherein said determining a quantity related to a constrained articulated momentum vector of said $K^{th}$ body comprises determining a constrained articulated momentum vector $\mathbf{P}_K^c$ given by

$$\mathbf{P}_K^c = \mathbf{P}_K + \sum_{j \in AOB} {}^K\mathcal{T}_j^F \mathbf{C}_j^T \mathbf{P}_j^c$$

wherein $\mathbf{P}_K$ is said momentum vector of the $K^{th}$ body, $\mathbf{C}_j^T \mathbf{P}_j^c$ is said projection of the constrained momentum vector of an adjacent body closer to the at least one further joint and ${}^K\mathcal{T}_j^F$ is a transformation matrix transforming the projection of the constrained momentum vector $\mathbf{C}_j^T \mathbf{P}_j^c$ referred to a local reference frame of a $j^{th}$ body to the

# EP 1 624 393 A1

projection of the constrained momentum vector $\mathbf{C}_j^{\mathrm{T}}\mathbf{P}_j^c$ referred to said local reference frame of said $K^{th}$ body.

6. A method according to any of claims 2 to 5, wherein said method furthermore comprises using a principle of virtual power.

7. A method for visualising, simulating or predicting, over a number of time steps $\delta t$, motion of a constrained mechanical system comprising multiple bodies, the method comprising

   - obtaining a set of Hamiltonian equations of motion for said constrained mechanical system, and
   - for each of said number of time steps $\delta t$,

   recursively calculating at least position related information of said multiple bodies of said constrained mechanical system based on said set of Hamiltonian equations of motion.

8. A method for visualising, simulating or predicting motion according to the claim 7, wherein said set of Hamiltonian equations of motion comprises, for generalized coordinates **q**, conjugated canonical momenta **p**, and time t, expressions for the time derivatives of the qeneralized coordinates **q** and of the conjugated canonical momenta **p**

$$\dot{\mathbf{q}} = F(\mathbf{q}, \mathbf{p}, t)$$

$$\dot{\mathbf{p}} = G(\mathbf{q}, \mathbf{p}, t)$$

9. A method for visualising, simulating or predicting motion according to claim 8, wherein said recursively calculating comprises

   - backward recursively calculating a constrained articulated mass matrix for the constrained mechanical system,
   - forward recursively calculating the time derivatives of the generalised co-ordinates **q**,
   - backward recursively calculating constrained accumulated force vectors, each constrained accumulated force vector expressing the accumulated force on the body under study, and
   - determining the time derivatives of the conjugated canonical momenta **p**.

10. A method for visualising, simulating or predicting motion according to any of claims 7 to 9, wherein said obtaining a set of Hamiltonian equations of motion for said constrained mechanical system comprises determining a set of equations of motion according to any of methods 1 to 6.

11. A method for visualising, simulating or predicting motion according to any of claims 7 to 10 wherein said obtaining a set of Hamiltonian equations of motion for said constrained mechanical system comprises inputting a set of Hamiltonian equations of motion from a data source.

12. A method for visualising, simulating or predicting motion according to any of claims 7 to 11, wherein said motion comprises the forward dynamics of said constrained mechanical system.

13. A method for visualising, simulating or predicting motion according to any of claims 7 to 11, wherein said method comprises studying an impact on said constrained mechanical system based on a sudden change in said qeneralized coordinates **q** or said conjugated canonical momenta **p**.

14. A method for visualising, simulating or predicting motion according to any of claims 7 to 13, wherein said method comprises studying multiple bodies in contact with each other.

15. A method for visualising, simulating or predicting motion according to any of claims 7 to 14, wherein said multiple bodies are rigid bodies, each body connected to at least another body of said multiple bodies with a joint.

16. A method for visualising, simulating or predicting motion according to any of claims 7 to 15, wherein said studying motion is applied in any of virtual prototyping, virtual reality or computer animation.

17. A computing device for computing the motion over a number of time steps $\delta t$ of a constrained mechanical system comprising multiple bodies, the computing device comprising

- means for obtaining data relating to a set of Hamiltonian equations of motion for said constrained mechanical system, and
- means for recursively computing, for each of said number of time steps $\delta t$, at least position related information of said multiple bodies of said constrained mechanical system based on said set of Hamiltonian equations of motion.

18. A computer program product to be utilized with a computer system for studying over a number of time steps $\delta t$ the motion of a constrained mechanical system comprising multiple bodies, the computer program product comprising

- instruction means for obtaining data relating to a set of Hamiltonian equations of motion for said constrained mechanical system, and
- instruction means for computing, for each of said number of time steps $\delta t$ , at least position related information of said multiple bodies of said constrained mechanical system based on said set of Hamiltonian equations of motion.

19. A machine readable data storage device storing the computer program product as claimed in claim 18.

20. Transmission of a computer program product according to claim 18 over a local area telecommunications network.

21. A method for visualising, simulating or predicting motion of a constrained mechanical system having multiple bodies, comprising

- backward recursively calculating a constrained articulated mass matrix for the constrained mechanical system,
- forward recursively calculating time derivatives of generalised coordinates **q** of the constrained mechanical system,
- backward recursively calculating constrained accumulated force vectors, each constrained accumulated force vector expressing an accumulated force on the constrained mechanical system, and
- determining time derivatives of conjugated canonical momenta **p**.

22. A computer based system for visualising, simulating or predicting motion, the system comprising:

means for backward recursively calculating a constrained articulated mass matrix for the constrained mechanical system,
means for forward recursively calculating time derivatives of generalised co-ordinates **q** of the constrained mechanical system,
means for backward recursively calculating constrained accumulated force vectors, each constrained accumulated force vector expressing an accumulated force on the constrained mechanical system, and
means for determining time derivatives of conjugated canonical momenta **p**.

**Fig. 1**

**Fig. 2**

**Fig. 3**

Obtain a model of the system ⌐202

200

Provide initialisation information ⌐204

Set t = t + δt ⌐206

Apply backward recursion to obtain

articulated mass matrices

⌐210

208

Apply forward recursion to obtain

the joint velocities

⌐212

Apply backward recursion to

accumulated force vectors

⌐214

Use obtained information to obtain

expressions for $\dot{q}$ and $\dot{p}$

⌐216

obtain updated information about the

multibody system

⌐218

NO

YES ⟨ Accuracy OK ⟩

NO

220

NO

⟨ t = t_{end} ? ⟩

YES

END

222

224

**Fig. 4**

**Fig. 5**

**European Patent Office**

**EUROPEAN SEARCH REPORT**

Application Number

EP 04 44 7184

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | NAUDET JORIS ET AL: "Forward dynamics of open-loop multibody mechanisms using an efficient recursive algorithm based on canonical momenta"<br>MULTIBODY SYST DYN; MULTIBODY SYSTEM DYNAMICS AUGUST 2003,<br>vol. 10, no. 1, August 2003 (2003-08),<br>pages 45-59, XP002318015<br>in particular section 6. Algorithm<br>* the whole document *<br>----- | 1-22 | G06F17/50 |
| A | AGHILI F ED - INSTITUTE OF ELECTRICAL AND ELECTRONICS ENGINEERS: "Inverse and direct dynamics of constrained multibody systems based on orthogonal decomposition of generalized force"<br>PROCEEDINGS OF THE 2003 IEEE INTERNATIONAL CONFERENCE ON ROBOTICS AND AUTOMATION. ICRA 2003. TAIPEI, TAWAN, SEPT. 14 - 19, 2003, PROCEEDINGS OF THE IEEE INTERNATIONAL CONFERENCE ON ROBOTICS AND AUTOMATION, NEW YORK, NY : IEEE, US,<br>vol. VOL. 1 OF 3,<br>14 September 2003 (2003-09-14), pages 4035-4041, XP010667931<br>ISBN: 0-7803-7736-2<br>* the whole document *<br>----- | 1-22 | |
| A | MARLE C -M: "Various approaches to conservative and nonconservative nonholonomic systems"<br>REPORTS ON MATHEMATICAL PHYSICS ELSEVIER; POLISH SCIENTIFIC PUBLISHERS PWN UK,<br>vol. 42, no. 1-2, October 1998 (1998-10),<br>pages 211-229, XP002318016<br>ISSN: 0034-4877<br>* the whole document *<br>----- | 1-22 | |

**TECHNICAL FIELDS SEARCHED (Int.Cl.7)**

G06F

The present search report has been drawn up for all claims

| Place of search | Date of completion of the search | Examiner |
|---|---|---|
| Munich | 16 February 2005 | Lerbinger, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)